Europäisches Patentamt

European Patent Office

Office européen des brevets

(11) Veröffentlichungsnummer: **0 311 801 B1**

## (12) EUROPÄISCHE PATENTSCHRIFT

(45) Veröffentlichungstag der Patentschrift: **02.12.92**

(21) Anmeldenummer: **88114995.9**

(22) Anmeldetag: **14.09.88**

(51) Int. Cl.⁵: **B60T 8/40**, B60T 8/42

---

### (54) Bremsanlage.

---

(30) Priorität: **13.10.87 DE 3734601**

(43) Veröffentlichungstag der Anmeldung:
**19.04.89 Patentblatt 89/16**

(45) Bekanntmachung des Hinweises auf die
Patenterteilung:
**02.12.92 Patentblatt 92/49**

(84) Benannte Vertragsstaaten:
**AT CH DE FR GB IT LI SE**

(56) Entgegenhaltungen:
**EP-A- 0 233 486**
**GB-A- 2 167 822**

(73) Patentinhaber: **ROBERT BOSCH GMBH**
**Postfach 30 02 20**
**W-7000 Stuttgart 30(DE)**

(72) Erfinder: **Bernhardt, Wolfgang, Dipl.-Ing.**
**Tubizer Strasse 21**
**W-7015 Korntal-Münchingen(DE)**
Erfinder: **Tischer, Michael, Dipl.-Ing.**
**Schillerstrasse 14**
**W-7101 Abstatt(DE)**

(74) Vertreter: **Knetsch, Manfred (DE) et al**
**Postfach 30 02 20**
**W-7000 STUTTGART 30(DE)**

## Beschreibung

Stand der Technik

Die Erfindung betrifft eine Bremsanlage mit einem Hauptbremszylinder gemäß Gattung des Anspruchs 1.

In der Praxis sind eine Vielzahl von Anti-Blockier-Systemen bekannt. Dabei wird zur Druckminderung des Bremsdrucks in der Regel Flüssigkeit in eine Kammer gepumpt, welche dem Bremsdruck entgegenwirkt, d. h. den Bremskolben, eine entsprechende Kolbenstange oder ein Bremspedal zurückführt. Diese Druckminderung wird in der Regel über eine Mehrzahl von Ventilen gesteuert, wie dies beispielsweise in der DE-OS 34 13 430 aufgezeigt ist. Diese Vielzahl von Ventilen bedeutet einen erheblichen technischen und wirtschaftlichen Aufwand. Ferner wird das Zurückführen des Bremspedals zur Druckminderung oftmals als unangenehm hart empfunden, insbesondere bei sehr starker Bremsung, bei der die Druckminderung schlagartig erfolgt.

Durch die GB-A-2 167 822 ist eine mit einem teuren hydraulischen Bremskraftverstärker und einer Verstärkerpumpe ausgerüstete Bremsanlage bekannt, die zur Durchführung von Blockierschutzbetrieb eingerichtet ist. Zu diesem Zweck ist gegenüberliegend zu einem Verstärkerkolben ein hydraulisch beaufschlagbarer Rückstellkolben vorgesehen, der mittels Druck aus der Verstärkerpumpe beaufschlagbar ist und dadurch den Verstärkerkolben in Richtung seiner Ausgangsstellung zurückschieben kann. Die Verstärkerpumpe muß arbeiten, sobald und solange gebremst wird. Demzufolge muß die Verstärkerpumpe in teurer Weise für eine lange Betriebsdauer ausgebildet werden. Während die Verstärkerpumpe arbeitet, entstehen Geräusche infolge unvermeidlicher hydraulischer Pulsationen. Ein weiterer, jedoch andersartiger Nachteil besteht darin, daß im Blockierschutzbetrieb notwendige Bremsdruckminderungen unmittelbar abhängig sind von Verschiebungen des Verstärkerkolbens in Richtung seiner Ausgangsstellung. Denn insbesondere bei starken Bremsungen erwünschte schlagartige Bremsdruckminderungen verursachen ein sofortiges oftmals als unangenehm hart empfundenes Zurückführen des Bremspedals in Richtung seiner Ausgangsstellung.

Es stellte sich deshalb die Aufgabe, insbesondere ein unangenehm hartes Zurückführen des Bremspedals in Richtung seiner Ausgangsstellung zu vermeiden.

Vorteile der Erfindung

Eine Bremsanlage mit den Merkmalen des Anspruchs 1 weist dagegen einen Druckraum auf, welcher einerseits mit einem Ausgleichsraum und andererseits mit einer Ringkammer in Verbindung steht, deren beider Volumen durch die Bewegung des Kolbens unter dem Bremsdruck der Kolbenstange entgegengesetzt veränderbar ist.

Wesentlich dabei ist, daß das gesamte System zwischen Ausgleichsraum, Druckraum und veränderbarer Ringkammer so ausgeglichen ist, daß bei einer Verringerung des Volumens, beispielsweise des Ausgleichsraumes das Volumen der Ringkammer erhöht wird und direkt oder indirekt von der aus dem Ausgleichsraum ausströmenden Flüssigkeit aufgefüllt wird.

Ein wesentlicher Teil der vorliegenden Erfindung ist ein Ventil, vorzugsweise ein Magnetventil, welches in die Verbindung zwischen Druckraum und Ausgleichsraum eingeschaltet ist. Mit diesem Ventil wird im Falle des Blockierens von Rädern die Verbindung zwischen Druckraum und Ausgleichsraum gesperrt und gleichzeitig eine Verbindung zwischen Druckraum und einem Flüssigkeitsspeicher geöffnet. Hierdurch kann ohne weiteres Bremsflüssigkeit in diesen Flüssigkeitsspeicher abfließen, so daß der Druck in der Bremsleitung bzw. im Druckraum gemindert wird.

Soll dann der Kolben bzw. das Bremspedal in seine Ausgangsstellung zurückgeführt werden, so ist hierfür eine Rückförderpumpe vorgesehen, welche Flüssigkeit aus dem Flüssigkeitsspeicher in den Ausgleichsraum zurückfördert. Durch diese Anordnung entsteht ein geschlossenes System, so daß keine Fremdflüssigkeit für die Rückführung des Bremspedals benötigt wird. Dies wäre beispielsweise der Fall, wenn der Ausgleichsraum direkt mit der Ringkammer verbunden wäre und der Druckraum über ein eigenes Magnetventil zu einem entsprechenden Flüssigkeitsspeicher hin entlastet werden könnte. Obwohl dieser Gedanke Nachteile mit sich bringt, soll er dennoch auch im Rahmen der Erfindung liegen. Allerdings werden dann zumindest zwei Ventile benötigt.

Der Vorteil dieser erfindungsgemäßen Anordnung liegt vor allem darin, daß eine Druckminderung vorgenommen werden kann, ohne daß es zu einer Rückführung des Kolbens bzw. des Bremspedals kommt. Diese Rückführung wird getrennt durch die Arbeit der Rückförderpumpe vorgenommen, so daß sie wesentlich sanfter eingestellt sein kann.

Ausgleichsraum und Ringkammer können an beliebiger geeigneter Stelle im Hauptbremszylinder vorgesehen sein. Es muß lediglich gewährleistet werden, daß durch die Arbeit des Kolbens eine Veränderung der beiden Räume stattfindet. Bevorzugt wird der Ausgleichsraum als Ringraum um den Kolben zwischen einer Gehäusestufe und einer Lippendichtung in der Stufenbohrung gebildet. Auf diese Lippendichtung soll dann die veränderbare Ringkammer, ebenfalls um den Kolben herum, ausgebildet sein. Um eine geeignete Abstützung insbesondere für die den Ausgleichsraum abdichtende Lippendichtung zu finden, ist dem Kolben ein Ringflansch angeformt. Die Ringkammer wird dann andererseits dieses Ringflansches von einer feststehenden Lippendichtung begrenzt, auf welche ggfs. ein Gleitring folgen kann, welcher der Führung des Kolbens dient.

Bei Verringerung des Volumens des Ausgleichsraumes fließt Flüssigkeit ggfs. über entsprechende Leitungen direkt in den Druckraum oder beispielsweise in die Bremsleitung. Da der Druckraum aber mit der sich weitenden Ringkammer verbunden ist, findet ein Flüssigkeitsausgleich statt. Dies geschieht bevorzugt durch eine Axialbohrung in dem Kolben sowie eine Querbohrung, die zu der Ringkammer führt.

Im Falle, daß zwei getrennte Bremskreise mit zwei getrennten Druckräumen sowie zwei Kolben vorgesehen sind, sollten die beiden Kolben miteinander so verbunden sein, daß auch hier ein Flüssigkeitsausgleich durch die Kolben hindurch zu der Ringkammer erfolgen kann. Im vorliegenden Ausführungsbeispiel geschieht dies durch ein Verbindungsrohr, welches in eine stirnwärtige Sacklochbohrung des zweiten Kolbens eingreift und in dieser Sacklochbohrung beweglich gelagert ist. Über entsprechende Öffnungen kann Flüssigkeit aus dem einen Druckraum durch eine Axialbohrung in dem Verbindungsrohr in die oben genannte Axialbohrung in dem anderen Kolben abfließen.

Damit bei normaler Bremstätigkeit ein ordnungsgemäßer Ausgleich der Flüssigkeit vom Ausgleichsraum zur Druckkammer bzw. zur Ringkammer erfolgen kann, sollten zumindest die wirksamen Flächen von Ausgleichsraum und Ringkammer etwa gleich sein. Hierdurch wird die ordnungsgemäße Bremstätigkeit nicht infolge unterschiedlichen Flusses gestört.

Am vorteilhaftesten erscheint es aber, wenn die wirksame Fläche von Ausgleichsraum und Ringkammer genauso groß oder nur geringfügig größer ist als die wirksamen Flächen von der oder den Druckkammer/n. Hierdurch wird der Flüssigkeitsfluß nochmals vergleichmäßigt. Demgegenüber ermöglicht das Prinzip aber auch den Aufbau von Stufenkolben-Hauptbremszylindern.

Insgesamt ist durch diese Erfindung eine Bremsanlage aufgezeigt, welche eine sehr kostengünstige Möglichkeit für ein sogenanntes Einkanal-System bietet.

Zeichnung

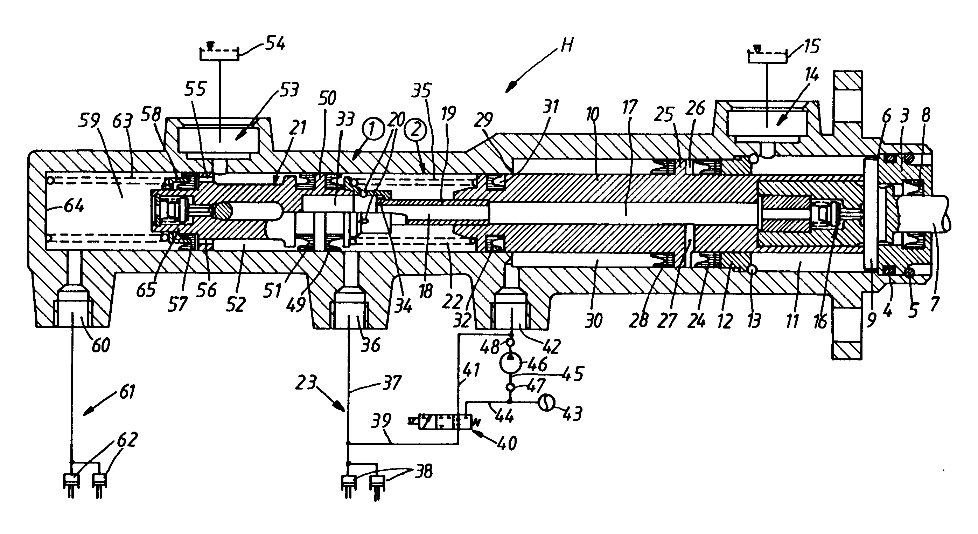

Die Erfindung wird nachfolgend anhand der Zeichnung näher erläutert. Diese zeigt in ihrer einzigen Figur einen Längsschnitt durch einen erfindungsgemäßen Hauptbremszylinder H mit weiteren blockschaltbildlich dargestellten Elementen einer Bremsanlage.

Der Hauptbremszylinder H weist ein Zylindergehäuse 1 mit einer axialen Stufenbohrung 2 auf. Diese Stufenbohrung 2 besitzt zur einen Stirnseite des Zylindergehäuses 1 hin eine Öffnung, welche mit einem Führungsring 3 besetzt ist, der sich über einen Haltering 5 gegen die Stufenbohrung 2 abstützt. Eine Abdichtung erfolgt über einen Dichtring 4. Die Eintauchtiefe des Führungsringes 3 in die Stufenbohrung 2 wird durch eine Gehäuseschulter 6 begrenzt.

Den Führungsring 3 durchgreift eine Kolbenstange 7, welche gegenüber dem Führungsring 3 durch eine Lippendichtung 8 abgedichtet ist. Diese Kolbenstange 7 trifft mit ihrer Stirnfläche 9 auf einen Kolben 10 des Hauptbremszylinders H. Dieser Kolben 10 durchsetzt zuerst einen Ringraum 11 und sodann einen Gleitring 12, welcher seiner Führung dient. Gleichzeitig begrenzt der Gleitring 12 den Ringraum 11, wobei er sich gegen einen Haltering 13 abstützt.

Der Ringraum 11 steht über einen Anschluß 14 mit einem Vorratsbehälter 15 für Bremsflüssigkeit in Verbindung. Aus dem Ringraum 11 kann Bremsflüssigkeit durch eine entsprechende Ventilanordnung 16 und durch eine Axialbohrung 17 in den Kolben 10 sowie eine weitere Axialbohrung 18 in einem Verbindungsrohr 19 und entsprechenden Öffnungen 20 in einem Schwimmkolben 21 in den ersten Druckraum 22 für den ersten Bremskreis 23 gelangen. Die Ventilanordnung 16 soll nachfolgend nicht näher beschrieben werden, da ihre Ausführung allgemein bekannt ist.

Nach dem Gleitring 12 umschließt den Kolben 10 eine feststehende Lippendichtung 24, welche in dem gezeigten Ausführungsbeispiel zusammen mit einem Ringflansch 25 des Kolbens 10 eine veränderbare Ringkammer 26 einschließt. Diese veränderbare Ringkammer 26 steht wiederum über Radialbohrungen 27 mit der Axialbohrung 17 in Verbindung.

Auf den Ringflansch 25 folgt eine weitere Lippendichtung 28, welche zusammen mit einem Teil der Stufenbohrung 2, einer Gehäusestufe 29 sowie einem Teil des Kolbens 10 einen Ausgleichsraum 30 einschließt. Nach der Gehäusestufe 26 entspricht der Durchmesser der Stufenbohrung 2 in etwa dem Durchmesser des Kolbens 10, so daß dieser in der Stufenbohrung 2 geführt ist. Zum Zwecke der Abdichtung ist an dieser Stelle in einem Ringkanal 31 des Kolbens 10 eine weitere Lippendichtung 32 eingesetzt.

Schwimmkolben 21 und Kolben 10 sind über das oben genannte Verbindungsrohr 19 miteinander verbunden, wobei dieses Verbindungsrohr 19 den ersten Druckraum 22 durchsetzt und in einer Sacklochbohrung 33 in die Stirn des Schwimmkolbens 21 eingreift. In dieser Sacklochbohrung 33 ist das Verbindungsrohr 19 beweglich gelagert, wobei es über einen endwärtigen Ringkragen 34 gegen ein Herausgleiten aus der Sacklochbohrung 33 gesichert ist. Aus der Sacklochbohrung 33 münden die Öffnungen 20 in den ersten Druckraum 22. Schwimmkolben 21 und Kolben 10 stützen sich über eine in dem ersten Druckraum 22 vorgesehene Schraubenfeder 35 gegeneinander ab. Somit wird durch das Verbindungsrohr 19 der maximale Hub des Schwimmkolbens 21 begrenzt. Ferner übernimmt es bei Kreisausfall, d. h. Druckverlust im Druckraum 22, die mechanische Verbindung zwischen Kolben 10 und Schwimmkolben 21.

Aus dem ersten Druckraum 22 führt ein Auslaß 36 sowie eine Bremsleitung 37 zu Radbremszylindern 38 des ersten Bremskreises 23. Von dieser Bremsleitung 37 führt eine Zweigleitung 39 zu einem Magnetventil 40. Über dieses Magnetventil 40 kann zum einen eine Verbindung mit einer Verbindungsleitung 41 zu einem Anschluß 42 zum Ausgleichsraum 30 hergestellt werden. Zum anderen kann jedoch auch die Zweigleitung 39 mit einem Niederdruckspeicher 43 verbunden werden. Von dieser Leitung 44 führt eine Bypaßleitung 45 über eine Rückförderpumpe 46, eingerahmt von zwei Rückschlagventilen 47 und 48, ebenfalls zum Anschluß 42 bzw. zu einer Verbindung mit der Verbindungsleitung 41.

Der erste Druckraum 22 wird linksseitig von einer weiteren Lippendichtung 49 begrenzt, welche den Schwimmkolben 21 umschließt und an einem Ringflansch 50 anschlägt. Andererseits stützt sich gegen diesen Ringflansch 50 eine weitere Lippendichtung 51 ab, welche wiederum einen Ringraum 52 abdichtet. Dieser Ringraum 52 weist einen entsprechenden Anschluß 53 an einen weiteren Vorratsbehälter 54 für Bremsflüssigkeit auf.

Andererseits der Lippendichtung 51 wird der Ringraum 52 von einem Flanschkragen 55 des Schwimmkolbens 21 begrenzt, wobei dieser Flanschkragen 55 von Parallelbohrungen 56 durchsetzt ist. Auf den Flanschkragen 55 folgt eine weitere Lippendichtung 57, welche von einem Stützring 58 gehalten ist. Diese Lippendichtung 57 dichtet einen zweiten Druckraum 59 ab, welcher einen Anschluß 60 an einen zweiten Bremskreis 61 bzw. Radbremszylinder 62 des zweiten Bremskreises 61 aufweist. Dabei ist der Schwimmkolben 21 mit dem Stützring 58 verbunden und stützt sich über diesen gegen eine Schraubenfeder 63 ab, welche am Boden 64 der Stufenbohrung 2 anschlägt.

Im Schwimmkolben 21 befindet sich wiederum eine nur allgemein als Ventilanordnung 65 bezeichnete Einrichtung, über welche eine Verbindung des Ringraumes 52 mit dem zweiten Druckraum 59 hergestellt werden kann. Der Ringraum 52 ist dabei ein bekannter Nachsaugraum, wie auch der Ringraum 11.

Die Wirkungsweise des erfindungsgemäßen Hauptbremszylinders ist folgende:

Bei normaler Bremstätigkeit befindet sich das Magnetventil 40 in der in dem Ausführungsbeispiel gezeigten Schaltstellung. D. h., die Verbindung zwischen Ausgleichsraum 30, erstem Druckraum 22 und veränderbarer Ringkammer 26 sind offen. Durch den Druck eines nicht näher gezeigten Bremspedals auf die Kolbenstange 7 wird der Kolben 10 nach links verschoben. Damit ändert sich das Volumen des Ausgleichsraumes 30, wobei die verdrängte Flüssigkeit über den Anschluß 42, die Verbindungsleitung 41, das Magnetventil 40 sowie die Zweigleitung 39 in die Bremsleitung 37 abfließen kann. Gleichzeitig wird Bremsflüssigkeit aus dem ersten Druckraum 22 entweder durch den Auslaß 36 zusätzlich in die Bremsleitung 37 eingegeben bzw. es gelangt zumindest ein Teil dieser Bremsflüssigkeit durch die Öffnungen 20 in die Sacklochbohrung 33 und von dort durch die Axialbohrung 18, die Axialbohrung 17 und die Radialbohrung 27 in die veränderbare Ringkammer 26. Damit wird ein Ausgleich der sich in diesem Kreislauf bewegenden Flüssigkeit herbeigeführt. Der in dem ersten Druckraum 22 erzeugte Bremsdruck wird dadurch nicht beeinflußt, was allerdings voraussetzt, daß die wirksamen Flächen im Ausgleichsraum 30 und in der veränderbaren Ringkammer 26 gleich groß sind.

Wird nun wegen des Blockierens der Räder eine Druckabsenkung in den beiden Bremskreisen 23 und 61 erforderlich, so schaltet das Magnetventil 40 in seine dritte Schaltstellung, wobei die Zweigleitung 39 mit dem Niederdruckspeicher 43 verbunden wird. Hierdurch kann Bremsflüssigkeit in den Niederdruckspeicher 43 gelangen, so daß der Bremsdruck in dem Bremszylinder 38 absinkt. Dies ist möglich, weil das Magnetventil gleichzeitig die Verbindung von Leitung 41 nach 39 sperrt und deshalb der Kolben 10 blockiert wird und keine weitere Bremsflüssigkeit in den ersten Bremskreis einspeisen kann. Dies bedeutet aber, daß der Kolben 10 und damit über die Kolbenstange 7 auch das Bremspedal in dieser Stellung verbleibt und nicht etwa einer Druckabsenkung nachfolgt. Die Druckabsenkung erfolgt nur in dem ersten Druckraum 22 und durch die ausgleichende Wirkung des Schwimmkolbens 21 auch im zweiten Druckraum 59.

Wird in diesem Stadium die Rückförderpumpe 46 eingeschaltet, so ändert sich an den bestehenden Druckverhältnissen nichts, weil die in den Ausgleichsraum 30 geförderte Flüssigkeit zwar eine Bewegung des Kolbens 10 gegen die Kolbenstange 7 bzw. das Bremspedal erzwingt, wodurch sich der erste Druckraum 22 volumenbezogen erweitert, jedoch diese Erweiterung durch die aus der veränderbaren Ringkammer 26 über die Radialbohrung 27, die Axialbohrungen 17 und 18 sowie die Öffnungen 20 in den ersten Druckraum 22 zurückfließende Flüssigkeit ausgeglichen wird. Damit findet keine weitere Druckabsenkung oder -erhöhung statt.

Soll nun wieder der Druck auf die Radbremszylinder 38 bzw. 62 erhöht werden, so wird das Magnetventil 40 wieder in seine erste Schaltstellung umgeschaltet, so daß wieder Flüssigkeit aus dem Ausgleichsraum 30 in die Bremsleitung 37 einfließen kann.

Ein Druckhalten wird im übrigen durch eine Mittelstellung des Magnetventils 40 bewirkt.

Im vorliegenden Ausführungsbeispiel sind zwar die Anschlüsse 42, 36 und 60 versetzt zueinander gezeichnet. Selbstverständlich können jedoch die Verbindungsleitung 41 und die Zweigleitung 39 auch direkt über zusätzliche Gewindeanschlüsse mit dem Auslaß 36 verbunden sein, so daß entsprechende Leitungen mit T-Stücken entfallen.

Ferner hat es sich als vorteilhaft erwiesen, die wirksamen Flächen der Räume 30 und 26 genauso groß oder nur geringfügig größer als die wirksamen Flächen des ersten und zweiten Druckraumes 22 bzw. 59 auszulegen.
Die Steuerung des Magnetventils 40 und der Pumpe 46 wird von einer nur schematisch dargestellten Steuereinheit 66 übernommen.

**Patentansprüche**

1. Bremsanlage mit einem Hauptbremszylinder (H) mit zumindest einem Kolben (10) in einer Stufenbohrung (2), welcher einerseits von einer Kolbenstange (7) beaufschlagt ist und andererseits einen Druckraum (22) begrenzt, aus dem ein Auslaß (36) beziehungsweise eine Bremsleitung (37) zu Radbremszylindern (38, 62) von zumindest einem Bremskreis (23, 61) führt, dadurch gekennzeichnet, daß der Druckraum (22) beziehungsweise die aus diesem Druckraum (22) ausmündende Bremsleitung (37) einerseits mit einem Ausgleichsraum (30) und andererseits mit einer Ringkammer (26) in Verbindung steht, deren beider Volumen durch die Bewegung des Kolbens (10) entgegengesetzt veränderbar ist, und daß in die Verbindung zwischen dem Druckraum (22) und dem Ausgleichsraum (30) ein Ventil (40) eingeschaltet ist, über welches diese Verbindung sperrbar ist, und daß in einer dritten Schaltstellung das Ventil (40) die Verbindung von dem Druckraum (22) und dem Ausgleichsraum (30) sperrt, jedoch den Druckraum (22) über eine Rückförderpumpe (46) mit dem Ausgleichsraum (30) verbindet, und daß an eine zwischen dem Ventil (40) und der Rückförderpumpe (46) liegende Leitung (44) ein Flüssigkeitsspeicher (43) angeschlossen ist.

2. Bremsanlage nach Anspruch 1, dadurch gekennzeichnet, daß in der Verbindung des Druckraumes (22) mit dem Ausgleichsraum (30) über die Rückförderpumpe (46) wenigstens ein Rückschlagventil (47,48) liegt, das in Richtung des Ausgleichsraumes (30) öffenbar ist.

3. Bremsanlage nach Anspruch 1 oder 2, dadurch gekennzeichnet, daß der Ausgleichsraum (30) als Ringraum um den Kolben (10) zwischen Gehäusestufe (29) und einer Dichtung (28), bevorzugt eine Lippendichtung, in der Stufenbohrung (2) vorgesehen ist.

4. Bremsanlage nach Anspruch 3, dadurch gekennzeichnet, daß auf die Dichtung (28) folgend die veränderbare Ringkammer (26) um den Kolben (10) herum ausgebildet ist.

5. Bremsanlage nach Anspruch 4, dadurch gekennzeichnet, daß zwischen Dichtung (28) und veränderbarer Ringkammer (26) ein dem Kolben (10) angeformter Ringflansch (25) vorgesehen ist.

6. Bremsanlage nach Anspruch 5, dadurch gekennzeichnet, daß die Ringkammer (26) andererseits des Ringflansches (25) von einer feststehenden Dichtung (24) begrenzt ist.

7. Bremsanlage nach Anspruch 6, dadurch gekennzeichnet, daß nachfolgend auf die Dichtung (24) ein Gleitring (12) den Kolben (10) führt.

8. Bremsanlage nach wenigstens einem der Ansprüche 1 bis 7, dadurch gekennzeichnet, daß der Druckraum (22) über eine Axialbohrung (17) sowie eine Querbohrung (27) mit der Ringkammer (26) in Verbindung steht.

9. Bremsanlage nach Anspruch 8 mit einem auf den Kolben folgenden Schwimmkolben zur Ausbildung eines zweiten Druckraumes für einen zweiten Bremskreis, dadurch gekennzeichnet, daß der Schwimmkolben (21) eine stirnwärtige Sacklochbohrung (33) aufweist, in welcher ein Verbindungsrohr (19) zum Kolben (10) lagert, wobei der Druckraum (22) über Öffnungen (20) sowie eine Axialbohrung (18) in dem Verbindungsrohr (19) mit der Axialbohrung (18) im Kolben (10) in Verbindung steht.

**10.** Bremsanlage nach wenigstens einem der Ansprüche 1 bis 9, dadurch gekennzeichnet, daß die wirksamen Flächen von Ausgleichsraum (30) und Ringkammer (26) etwa gleich sind.

**11.** Bremsanlage nach Anspruch 10, dadurch gekennzeichnet, daß die wirksamen Flächen von Druckraum (22) und Druckraum (59) gleich oder geringfügig kleiner sind als diejenigen des Ausgleichsraums (30) und der Ringkammer (26).

## Claims

**1.** Brake system having a master brake cylinder (H) with at least one piston (10) in a stepped bore (2), which is acted upon on one side by a piston rod (7) and on the other side delimits a pressure space (22) from which an outlet (36) or brake line (37) leads to wheel brake cylinders (38, 62) of at least one brake circuit (23, 61), characterised in that the pressure space (22) or brake line (37) leading out of this pressure space (22) is connected on the one hand to a compensation space (30) and on the other hand to an annular chamber (26), the two volumes of which can be varied reciprocally by the movement of the piston (10), and in that a valve (40) is inserted into the connection between the pressure space (22) and the compensation space (30), via which valve this connection can be locked, and in that, in a third position, the valve (40) locks the connection between the pressure space (22) and the compensation space (30) but connects the pressure space (22) to the compensation space (30) via a return pump (46), and in that a fluid accumulator (43) is connected to a line (44) situated between the valve (40) and the return pump (46).

**2.** Brake system according to Claim 1, characterised in that situated in the connection between the pressure space (22) and the compensation space (30) via the return pump (46) is at least one nonreturn valve (47, 48), which can be opened in the direction of the compensation space (30).

**3.** Brake system according to Claim 1 or 2, characterised in that the compensation space (30) is provided as an annular space around the piston (10) between housing step (29) and a seal (28), preferably a lip seal, in the stepped bore (2).

**4.** Brake system according to Claim 3, characterised in that the variable annular chamber (26) is formed around the piston (10) following the seal (28).

**5.** Brake system according to Claim 4, characterised in that an annular flange (25) formed integrally on the piston (10) is provided between the seal (28) and the variable annular chamber (26).

**6.** Brake system according to Claim 5, characterised in that, on the other side of the annular flange (25), the annular chamber (26) is delimited by a fixed seal (24).

**7.** Brake system according to Claim 6, characterised in that a slide ring (12) situated behind the seal (24) guides the piston (10).

**8.** Brake system according to at least one of Claims 1 to 7, characterised in that the pressure space (22) is connected to the annular chamber (26) via an axial bore (17) and a transverse bore (27).

**9.** Brake system according to Claim 8 having a floating piston which follows the piston to form a second pressure space for a second brake circuit, characterised in that the floating piston (21) has a frontal blind bore (33) in which a connecting tube (19) to the piston (10) is supported, the pressure space (22) being connected via openings (20) and an axial bore (18) in the connecting tube (19) to the axial bore (18) in the piston (10).

**10.** Brake system according to at least one of Claims 1 to 9, characterised in that the effective surfaces of the compensation space (30) and the annular chamber (26) are approximately equal.

**11.** Brake system according to Claim 10, characterised in that the effective surfaces of pressure space (22) and pressure space (59) are equal to or slightly less than those of the compensation chamber (30) and the annular chamber (26).

## Revendications

**1.** Installation de freinage comportant un maître-cylindre (H) avec au moins un piston (10) dans un alésage à gradin (2), et qui coopère lui-même avec une tige de piston (7) et par ailleurs délimite une chambre de pression (22) reliée par une sortie (36) ou une conduite de frein (37) vers les cylindres de frein de roue (38, 62) d'au moins un circuit de freinage (23, 61), caractérisée en ce que la chambre de pression (22) ou la conduite de frein (37) débouchant de ceite chambre de pression (22) est, d'une part, reliée à une chambre de compensation (30) et, d'autre part, à une chambre annulaire (26) dont les deux volumes varient en sens opposé lors du mouvement du piston (10) et en ce que la liaison entre la chambre de pression (22) et la chambre de compensation (30) comporte une vanne (40) qui peut couper cette liaison et en ce que dans sa troisième position, la vanne (40) coupe la liaison entre la chambre de pression (22) et la chambre de compensation (30) en reliant néanmoins la chambre de pression (22) à la chambre de compensation (30) par une pompe de refoulement (46) et en ce qu'une conduite (44) prévue entre la vanne (40) et la pompe de refoulement (46) est reliée à un réservoir de liquide (43).

2. Installation de freinage selon la revendication 1, caractérisée en ce que la liaison entre la chambre de pression (22) et la chambre de compensation (30) à travers la pompe de refoulement (46) comporte au moins un clapet anti-retour (47, 48) ouvert en direction de la chambre de compensation (30).

3. Installation de frein selon la revendication 1 ou 2, caractérisée en ce que la chambre de compensation (30) est une chambre annulaire entourant le piston (10) entre le gradin (29) du corps et un joint (28) de préférence un joint à lèvres dans l'alésage à gradin (2).

4. Installation de freinage selon la revendication 3, caractérisée en ce que la chambre annulaire (26) variable est réalisée autour du piston (10) en suivant le joint (28).

5. Installation de freinage selon la revendication 4, caractérisée en ce qu'entre le joint (28) et la chambre annulaire variable (26) il est prévu une bride annulaire (25) adaptée au piston (10).

6. Installation de freinage selon la revendication 5, caractérisée en ce que la chambre annulaire (26) est délimitée de l'autre côté de la bride annulaire (25) par un joint fixe (24).

7. Installation de freinage selon la revendication 6, caractérisée en ce qu'une bague de glissement (12) guide le piston (10) en suivant le joint (24).

8. Installation de freinage selon au moins l'une des revendications 1 à 7, caractérisée en ce que la chambre de pression (22) est reliée par un perçage axial (17) ainsi qu'un perçage transversal (27) à la chambre annulaire (26).

9. Installation de freinage selon la revendication 8, comportant un piston flottant suivant le piston pour former une seconde chambre de pression pour un second circuit de freinage, caractérisée en ce que le piston flottant (21) comporte un trou borgne (33) frontal logeant un tube de liaison (19) vers le piston (10), et la chambre de pression (22) communique par des ouvertures (20) ainsi que par un perçage axial (18) du tube de liaison (19) avec le perçage axial (18) du piston (10).

10. Installation de freinage selon au moins l'une des revendications 1 à 9, caractérisée en ce que la surface efficace de la chambre de compensation (30) est sensiblement égale à celle de la chambre annulaire (26).

11. Installation de freinage selon la revendication 10, caractérisée en ce que la surface utile de la chambre de pression (22) et celle de la chambre de pression (59) sont égales ou légèrement inférieures à la surface utile de la chambre de compensation (30) et de la chambre annulaire (26).